(19) Europäisches Patentamt
European Patent Office
Office européen des brevets

(11) EP 4 706 982 A1

(12) **EUROPEAN PATENT APPLICATION**

(43) Date of publication:
**11.03.2026 Bulletin 2026/11**

(21) Application number: **25197205.5**

(22) Date of filing: **21.08.2025**

(51) International Patent Classification (IPC):
***B60C 1/00*** *(2006.01)* ***B60C 9/00*** *(2006.01)*
***B60C 9/20*** *(2006.01)* ***B60C 11/00*** *(2006.01)*

(52) Cooperative Patent Classification (CPC):
**B60C 1/0016; B60C 9/0042; B60C 9/2009; B60C 11/005;** B60C 2009/2214; B60C 2009/2257; B60C 2011/0033

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.09.2024 JP 2024153961**

(71) Applicant: **Sumitomo Rubber Industries, Ltd.**
**Kobe-shi, Hyogo 651-0072 (JP)**

(72) Inventor: **TASHIRO, Mizuki**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **TIRE**

(57) To improve the comprehensive performance of a tire, including rolling resistance, and durability and steering stability during high-speed running, provided is a tire comprises a carcass having a carcass cord, a belt having a belt cord and provided on the radially outer side of the carcass, a band having a band cord and provided on the radially outer side of the belt, and a tread provided on the radially outer side of the band; and the band cord is a band cord containing polyethylene terephthalate fiber, the tread is formed using a rubber composition containing more than 50 parts by mass of styrene-butadiene rubber (SBR) having a styrene content of less than 25% by mass per 100 parts by mass of the rubber component, and further, the tire satisfies the following formula 1, where T (mm) is the thickness of the tread, S (% by mass) is the amount of styrene in the styrene-butadiene rubber, and D (mm) is the diameter of the band cord.

$$T \times S \times D < 80 \qquad \text{(formula 1)}$$

Figure 2

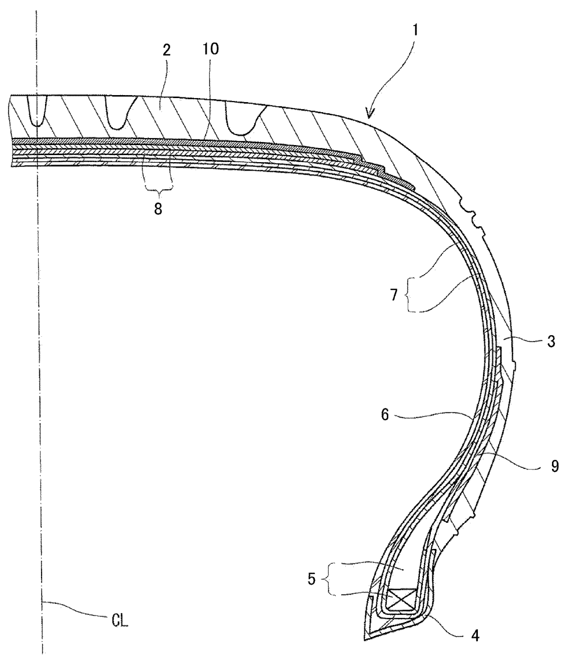


EP 4 706 982 A1

## Description

[TECHNICAL FIELD]

The present invention relates to a tire.

[BACKGROUND ART]

As disclosed in Patent document 1, in passenger car tires, a band (also called a cap ply) is generally provided between the tread and the belt as a belt reinforcing layer to prevent tire deformation due to centrifugal force during high-speed running.

[Prior art documents]

[Patent documents]

[Patent Document 1] JP 2022-38812 A

[SUMMARY OF THE INVENTION]

[PROBLEM TO BE SOLVED BY THE INVENTION]

An object of the present invention is to improve the comprehensive performance of a tire, including rolling resistance, durability during high-speed running, and steering stability.

[MEANS FOR SOLVING THE PROBLEM]

The present invention is;

a tire provided with
a carcass having a carcass cord;
a belt having a belt cord and provided on an outer side of the carcass in a radial direction of the tire;
a band having a band cord and provided on an outer side of the belt in a radial direction of the tire; and
a tread provided on an outer side of the band in a tire radial direction, wherein
the band cord is a band cord containing polyethylene terephthalate fibers,
the tread is formed using a rubber composition containing more than 50 parts by mass of styrene-butadiene rubber (SBR) having a styrene content of less than 25% by mass per 100 parts by mass of the rubber component, and
the tire is characterized in that, when the thickness of the tread is T (mm), the amount of styrene in the styrene-butadiene rubber is S (% by mass), and the diameter of the band cord is D (mm), the following (formula 1) is satisfied:

$$T \times S \times D < 80 \qquad \text{(formula 1)}$$

[EFFECT OF THE INVENTION]

According to the present invention, it is possible to improve the rolling resistance, and the comprehensive performance of the tire including tire durability and steering stability during high-speed running.

[BRIEF EXPLANATION OF DRAWINGS]

Figure 1 is a diagram illustrating an intersection angle between a tire circumferential direction and a longitudinal direction of a belt cord in one embodiment of the present invention.
Figure 2 is a schematic cross-sectional view illustrating a tire according to one embodiment of the present invention.

[EMBODIMENTS FOR CARRYING OUT THE INVENTION]

[1] Features of the tire according to the present invention

First, the features of the tire according to the present invention will be described.

1. Overview

The tire according to the present invention is provided with a carcass having a carcass cord, a belt having a belt cord and provided on the radially outer side of the carcass, a band having a band cord and provided on the radially outer side of the belt, and a tread provided on the radially outer side of the band. The band cord is a band cord containing polyethylene terephthalate (PET) fiber. The tread is formed using a rubber composition containing more than 50 parts by mass of styrene butadiene rubber (SBR) having a styrene content of less than 25% by mass per 100 parts by mass of a rubber component. Furthermore, when the thickness of the tread is T (mm), the amount of styrene in the SBR is S (% by mass), and the diameter of the band cord is D (mm), the following (formula 1) is satisfied.

$$T \times S \times D < 80 \qquad \text{(formula 1)}$$

By having these features, as described below, in a tire using the band, it is possible to improve the comprehensive performance of the tire, including rolling resistance, and durability and steering stability during high-speed running.

2. Mechanism of the effect manifestation in the tire according to the present invention

The mechanism by which the above-mentioned effects are exhibited in the tire according to the present invention is believed to be as follows.

(1) Use of PET band cord

In the tire according to the present invention, a band cord containing polyethylene terephthalate (PET) fibers (PET band cord) is used as the band cord.

Since PET fiber has higher rigidity than nylon 66 (polyamide synthetic fiber), which has been mainly used for band cords in the past, the use of PET cords for band cords makes it possible to exert the same binding force even with a smaller cord diameter (cord gauge). As a result, the thickness of the band (prep gauge) and the weight of the band (prep weight) can be reduced, which is believed to contribute to reducing the weight of the tire and the rolling resistance.

(2) Use of low styrene content SBR in rubber composition for tread

However, since the PET band cord has a higher temperature dependency than nylon 66 (polyamide synthetic fiber), when a PET band cord is used as a band cord adjacent to the tread, the temperature around the cord increases during high-speed running, leading to a decrease in the rigidity of the band cord, and there is a concern that this may reduce the durability and steering stability of the tire during high-speed running.

Therefore, in the present invention, the tread is formed using a rubber composition (rubber composition for tread) containing more than 50 parts by mass of styrene-butadiene rubber (SBR) having a styrene content of less than 25% by mass per 100 parts by mass of the rubber component.

That is, since the lower the styrene content of SBR, the lower the heat generation, the use of low-styrene-content SBR, in which the styrene content is less than 25 % by mass, is preferred for reducing rolling resistance, i.e., achieving low rolling resistance (LRR).

When the low styrene content SBR with a styrene content of less than 25% by mass is contained in an amount of more than 50 parts by mass per 100 parts by mass of the rubber component, a moderate amount of styrene portion is generated in the rubber component, and styrene domains are easily formed. By forming such styrene domains, the force received by the tire can be alleviated by suppressing the propagation of impacts and cracks from the tire surface at the interface with the molecular chains of other rubber components, and it is considered that the deformation caused by friction between the tire and the road surface during high-speed running can be alleviated, and the durability and steering stability of the tire during high-speed running can be improved.

In the present invention, "containing more than 50 parts by mass of SBR having a styrene content of less than 25 % by mass per 100 parts by mass of the rubber component" means that the amount of SBR per 100 parts by mass of the rubber component is more than 50 parts by mass, and the amount of styrene in the entire SBR is less than 25 % by mass.

That is, when the rubber component contains only a styrene-containing polymer (SBR), it indicates that the styrene content is less than 25 % by mass. When the rubber component contains multiple styrene-containing polymers

(SBR), it indicates that the styrene content calculated by the sum of the product of the styrene content (% by mass) in each polymer and the blending amount (parts by mass) of that polymer per 100 parts by mass of the rubber component is less than 25 % by mass.

More specifically, for example, when 100 parts by mass of the rubber component contains SBR1 (X1 parts by mass) having a styrene amount S1% by mass and SBR2 (X2 parts by mass) having a styrene amount S2% by mass, the amount of styrene calculated from the formula $\{(S1 \times X1) + (S2 \times X2)\} / (X1 + X2)$ is less than 25% by mass.

In addition, in the case of a rubber composition after vulcanization, the styrene content can also be calculated by determining the amount of styrene contained in the rubber component after acetone extraction using solid-state nuclear magnetic resonance (solid-state NMR) or a Fourier transform infrared spectrophotometer (FTIR).

(3) Relationship between tread thickness, styrene content, and band cord diameter

In the present invention, further, when the thickness of the tread is T (mm), the content of styrene in the SBR is S (% by mass), and the diameter of the band cord is D (mm), the following (formula 1) is satisfied.

$$T \times S \times D < 80 \qquad \text{(formula 1)}$$

The smaller the diameter D (mm) of the band cord, the less the tire weight and the less rolling resistance (LRR); however, the smaller the band cord rigidity, which is concerned to reduce the durability and steering stability of the tire during high-speed running.

On the other hand, the lower the styrene content S (% by mass) in the SBR, the lower the heat generation and the reduced rolling resistance (LRR), and by containing an appropriate amount of low-styrene content SBR, the durability and steering stability of the tire during high-speed running can be improved.

Furthermore, the thinner the tread thickness T (mm), the lighter the tire weight can be, so the amount of heat generated can be reduced, and the rolling resistance can be reduced.

Considering the above, by appropriately controlling the relationship between the diameter D (mm) of the PET band cord, the content of styrene S (% by mass) in the SBR, and the thickness T (mm) of the tread, specifically by controlling the product ($T \times S \times D$) of these to be less than 80, it is possible to carry out a tread design that generates less heat and is advantageous for high-speed running while maintaining the advantage of weight reduction. Further, it is possible to ensure the durability and steering stability of the tire during high-speed running while maintaining the modulus of the PET band cord, and therefore it is possible to improve the comprehensive performance of the tire, including the rolling resistance and the durability and steering stability during high-speed running.

In the above, the "diameter of the band cord" can be measured in accordance with the method specified in JIS L1017:2002 "Testing methods for synthetic fiber tire cords", and refers to the diameter when the circumscribing circle of a cross section perpendicular to the extending direction of the cord is a perfect circle, and refers to the equivalent circle diameter (the diameter of a circle when a perfect circle with the same cross-sectional area is assumed) when the circumscribing circle is an ellipse or the like.

Here, "tread thickness" refers to the thickness of the tread on the tire equatorial plane in the tire radial cross section. In the case where the tread is formed of a single rubber composition, it refers to the thickness of that rubber composition. In the case where the tread is formed of a laminated structure of multiple rubber compositions described below, it refers to the thickness of the cap rubber layer, which is the outermost layer on the contact surface side among those layers, and can be measured by aligning the bead portion to the standardized rim width in a cross section cut out in the radial direction of the tire.

Here, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

[2] More preferred embodiments of the tire according to the present invention

The tire according to the present invention can achieve even greater effects by adopting the following aspects.

1. Use of single-twisted PET band cord

In the present invention, it is preferred to use, as the PET band cord, a single-twisted PET band cord obtained by twisting a single yarn containing PET fibers.

By using a single-twisted PET band cord, a band with higher rigidity can be obtained even if the cord diameter is reduced, making it possible to reduce the weight of the tire and the rolling resistance.

The filaments constituting the yarn may be PET fibers only, or may be a mixture of PET fibers and other fibers (such as polyamide fibers).

From the viewpoint of the effect of the present invention (improving tire durability during high-speed running), the specific diameter D of the band cord is preferably more than 0.2 mm, 0.4 mm or more, 0.5 mm or more, or 0.62 mm or more. On the other hand, from another viewpoint (ride comfort), the diameter D is preferably less than 0.8 mm, 0.62 mm or less, less than 0.6 mm, 0.5 mm or less, or 0.4 mm or less .

From the viewpoint of the effect of the present invention (improving tire durability during high-speed running), the gauge on the cord of the band is preferably 0.01 mm or more, 0.03 mm or more, or 0.05 mm or more. On the other hand, from another viewpoint (ride comfort), it is preferably 0.05 mm or less, 0.04 mm or less, or 0.03 mm or less.

The above-mentioned "gauge on the cord of the band" can be obtained by measuring the distance from the upper end (or lower end) of the cord to the upper end (lower end) of the band.

From the viewpoint of the effect of the present invention (improving tire durability during high-speed running), the total gauge of the band is preferably 0.20 mm or more, 0.46 mm or more, 0.50 mm or more, 0.60 mm or more, or 0.72 mm or more. On the other hand, from another viewpoint (ride comfort), it is preferably 0.72 mm or less, 0.60 mm or less, 0.50 mm or less, or 0.46 mm or less.

The PET fiber is preferably a sustainable material that is environmentally friendly. Examples of the PET fiber that is a sustainable material (sustainable PET fiber) include PET fiber (recycled PET fiber) that is recycled from plastic waste such as used PET bottles, old products, and waste materials, and PET fiber (bio - PET fiber) that is produced from biomass.

A band having a PET cord can be manufactured by treating the PET cord with an adhesive and then bonding it to a predetermined rubber composition for bands. Examples of the adhesive used to bond the PET cord include epoxy compounds such as EX-313 (glycerin polyglycidyl ether, manufactured by Nagase Chemtex Corporation) and RFL (resorcinol-formalin-latex).

The band may be one layer or two layers. The band may be formed over the entire width of the tread, or may be formed only on both ends of the tread.

The number of cords per 50 mm width of the band cord (ends: cords/5 cm) is preferably more than 30 cords/5 cm, more preferably more than 40 cords/5 cm, and further preferably more than 45 cords/5 cm. By increasing the ends, the band becomes more rigid and the effect of suppressing belt vibration becomes greater, which is considered to improve the durability of the tire during high-speed running. There is no particular upper limit, but it is preferably less than 70 cords/5 cm, more preferably less than 60 cords/5 cm, and further preferably less than 55 cords /5 cm.

The ends of the band cord can be measured as the number of cords present in a width of 5 cm in the direction perpendicular to the longitudinal direction.

2. Tread

(1) Content of styrene in SBR

In the present invention, the content of styrene in the SBR is less than 25% by mass as described above, but from the viewpoint of the effect of the present invention (improving the durability of the tire during high-speed running), it is more preferably 24% by mass or less, 20% by mass or less, or 18% by mass or less. On the other hand, from another viewpoint (ride comfort), it is preferably 5% by mass or more, 10% by mass or more, 18% by mass or more, or 24% by mass or more.

(2) Content of low styrene content SBR

In the present invention, the content of low styrene content SBR contained in 100 parts by mass of the rubber component is more than 50 parts by mass as described above, but from the viewpoint of the effect of the present invention (improvement of tire durability during high-speed running) and taking into consideration the formation of more appropriate styrene domains, it is more preferable 55 parts by mass or more, more than 60 parts by mass, or 70 parts by mass or more. On the other hand, from another viewpoint (viewpoint of ride comfort), it is preferable less than 80 parts by mass, 70 parts by mass or less, less than 70 parts by mass, or 55 parts by mass or less.

(3) Relationship between tread thickness, styrene content, and band cord diameter

In the present invention, the product (T × S × D) of the diameter D (mm) of the PET band cord, the content of styrene S (% by mass) in the SBR, and the thickness T (mm) of the tread is controlled to be less than 80 as described above, but from the viewpoint of the effects of the present invention (improvement of tire durability during high-speed running), it is more preferably less than 79, less than 70, less than 68, less than 65, 63 or less, 60 or less, or 48 or less. On the other hand, from another viewpoint (viewpoint of ride comfort), it is preferably more than 35, more than 40, more than 45, 48 or more, 60 or more, 63 or more, more than 67, or more than 78.

(4) Silica

In the present invention, the rubber composition for tread preferably contains more than 75 parts by mass of silica per 100 parts by mass of the rubber component. By containing more than 75 parts by mass of silica having OH groups on the surface per 100 parts by mass of the rubber component, hydrogen bonds are formed between the silica surfaces, and also interact with the rubber component, so that force can be easily generated and transmitted inside the rubber during running. As a result, it is believed that the force generated during cornering can be easily transmitted, and excellent steering stability can be ensured. The content is more preferably 80 parts by mass or more, or 90 parts by mass or more. On the other hand, from another viewpoint (from the viewpoint of ride comfort), the content is preferably 200 parts by mass or less, 150 parts by mass or less, 100 parts by mass or less, or 80 parts by mass or less.

In addition, when silica is contained, if the particle size (average primary particle size) is too small, the processability is deteriorated, so it is preferable to use silica having a particle size of more than 8 nm. Using silica having a particle size of 9 nm or more is more preferred, and silica having a particle size of 10 nm or more is further preferred. On the other hand, from the viewpoint of ensuring the reinforcement of rubber, it is preferable to use silica with a particle size of 25 nm or less, more preferably 20 nm or less, and further preferably 17 nm or less.

The average primary particle size of silica means the average value of the values obtained by observing the smallest particle unit of silica constituting the aggregate structure as a circle and measuring the absolute maximum length of the smallest particle as the diameter of the circle, and can be determined by observing with a transmission or scanning electron microscope, measuring 400 or more primary particles of silica observed within the field of view, and averaging the measurements.

Specifically, silica particles picked out from a rubber composition cut out from a tire are directly observed using an electron microscope or the like, and the equivalent cross-sectional area diameter is calculated from the area of each silica particle obtained, and the average value is calculated to calculate the average primary particle diameter.

(5) Acetone extractables (AE amount)

Furthermore, in the present invention, the AE amount of the rubber composition for tread is preferably 11 % by mass or more, more than 15% by mass, more than 20% by mass, or 25% by mass or more from the viewpoint of the effect of the present invention (improvement of tire durability during high-speed running). On the other hand, from another viewpoint (ride comfort), it is preferably less than 30% by mass, 25% by mass or less, or 11% by mass or less.

The AE amount can be considered as an index showing the amount of a material that imparts plasticity to the rubber component, such as a softener (plasticizer), in the rubber composition, and can also be considered as an index showing the softness of the rubber composition. Therefore, when the AE amount of the rubber composition for tread is increased to a certain extent, such as more than 15 % by mass, the tread block can be deformed flexibly, and even when running at high speeds, the contact area with the road surface can be sufficiently secured, heat generation due to concentration of contact pressure can be suppressed, and it is considered that the durability of the tire during high speed running can be further improved.

The AE amount can be measured in accordance with JIS K 6229: 2015. Specifically, the AE amount (% by mass) can be obtained by immersing a vulcanized rubber test piece cut out from the measurement site in acetone for a predetermined time and determining the mass reduction rate (%) of the test piece.

More specifically, each vulcanized rubber test piece is immersed in acetone for 72 hours at room temperature and normal pressure to extract the soluble components, and the mass of each test piece before and after extraction is measured, and the AE amount can be calculated according to the following formula.

AE amount (% by mass) = (mass of rubber test piece before extraction - mass of rubber test piece after extraction) / (mass of rubber test piece before extraction) × 100

The amount of AE can be appropriately changed by changing the compounding ratio of the plasticizer in the

rubber composition.

(6) Thickness of tread

In the present invention, from the viewpoint of the effect of the present invention (improving the durability of the tire during high-speed running), the thickness of the tread is preferably 5 mm or more, more than 6 mm, 7 mm or more, 8 mm or more, or 10 mm or more, which is considered to reduce the compression received by the band and improve the durability of the tire during high-speed running. On the other hand, from another viewpoint (ride comfort), the thickness is preferably 20 mm or less, 15 mm or less, 12 mm or less, 7 mm or less, 5 mm or less.

(7) Multi-layered tread

In the present invention, the tread may be composed of only one layer (cap rubber layer) which is the ground contact surface, or may be composed of two layers with a base rubber layer provided inside the cap rubber layer, or may be composed of three layers, or may be composed of four or more layers. In this case, the above-mentioned rubber composition for tread is the rubber composition which forms the cap rubber layer which is the outermost layer on the ground contact surface side, and it is preferable that each of the above-mentioned parameters is satisfied.

In this case, the thickness of the cap rubber layer in the entire tread is preferably 10% or more, more preferably 30% or more, further preferably 50% or more, and further preferably 70% or more.

3. Belt

In the present invention, the belt cord constituting the belt is preferably composed of 4 or less filaments. By reducing the number of filaments in this way, even if the filaments are made of metal, the weight can be reduced to achieve a lighter tire, which is considered to reduce the rolling resistance and improve fuel efficiency.

The material of the filaments constituting the belt cord is not particularly limited, but is preferably made of metal, more preferably made of iron, and particularly preferably made of steel. The belt cord preferably has a structure of a non-twisted 1×1 structure, a single-twisted 1×2 structure, a 1 ×3 structure, a 1×4 structure, or a layer-twisted 2+2 structure. The filaments preferably have a circular cross-sectional shape, but may also be elliptical, and may be corrugated or plated.

In the present invention, the intersection angle, which is the smaller angle between the tire circumferential direction and the longitudinal direction of the belt cord when the tread is viewed in a plan view in the tire radial direction, is preferably 28 degrees or less, less than 25 degrees, 24 degrees or less, less than 24 degrees, or 20 degrees or less from the viewpoint of the effect of the present invention (improvement of tire durability during high-speed running). On the other hand, from another viewpoint (ride comfort), it is preferably 20 degrees or more, 24 degrees or more, or 28 degrees or more.

Specifically, as shown in Figure 1, the smaller angle $\theta$ between the longitudinal direction of the belt cords 8a, 8a, ... constituting the belt 8 and the center line CL in the tire circumferential direction is set as the intersection angle, and the angle is controlled to be less than 25 degrees.

By reducing the intersection angle in this manner, it is possible to increase the tread rigidity and the restraining force, which is believed to improve responsiveness during running and improve steering stability.

Furthermore, by reducing the intersection angle, the ground contact shape can be flattened, thereby counteracting the disadvantage that the ground contact shape of a band cord using PET cord tends to be round. It is believed that the increased binding force achieved by using the PET cord and the increased binding force achieved by reducing the intersection angle of the lightweight belt cord can improve the durability of the tire when running at high speeds.

In the present invention, the intersection angle is expressed as an absolute value without a sign of ± according to the above definition, even if the inclination direction of the belt cord is opposite to the tire circumferential direction. Also, for example, in a case where there are two or more belt layers with different intersection angles, it is sufficient that the intersection angle of at least one belt layer is less than 25 degrees.

The diameter of the belt cord is preferably 0.42 mm or more, more preferably 0.45 mm or more, and further preferably 0.47 mm or more. The upper limit is, for example, preferably 0.56 mm or less, more preferably 0.53 mm or less, and further preferably 0.50 mm. This allows the belt portion to have a thin gauge, which is considered to improve the comprehensive performance of the tire, including durability and steering stability during high-speed running.

In the above, the "belt cord diameter" can be measured in accordance with the test method specified in JIS G3510 :1992 "Test Method for Steel Tire Cords", and refers to the diameter when the circumscribing circle of a cross section perpendicular to the extending direction of the cord is a perfect circle, and refers to the equivalent circle diameter (the diameter of a circle when a perfect circle with the same cross-sectional area is assumed) when the circumscribing circle is an ellipse or the like.

The number of cords per 50 mm width of the belt cord (ends: cords /5 cm) is preferably 20 cords /5 cm or more,

more preferably 25 cords /5 cm or more, and further preferably 30 cords /5 cm or more. The upper limit is, for example, preferably 60 cords /5 cm or less, more preferably 55 cords /5 cm or less, and further preferably 50 cords /5 cm or less.
The ends of the belt cord can be measured as the number of cords present in a width of 5 cm in the direction perpendicular to the longitudinal direction .

4. Carcass

In the present invention, from the viewpoint of the effect of the present invention (improvement of tire durability during high-speed running), it is preferable to use a carcass formed using carcass cords having a fineness (total fineness) of more than 2300 dtex, 2880 dtex or more, or 3340 dtex or more.
By forming the carcass using a carcass cord with a fineness of over 2300 dtex and a certain thickness or more, it is possible to increase the lateral spring constant and change (reduce) the degree of deflection occurring in the side portion during running, and therefore it is considered possible to ensure the strength of the tire, improve the steering stability, and improve the durability of the tire during high-speed running. From another viewpoint (from the viewpoint of ride comfort), it is preferable that the fineness is less than 4000 dtex, 3340 dtex or less, or 2880 dtex or less.
The total fineness of the carcass cord is the sum of the finenesses of the yarns forming the cord, which are measured in accordance with the method specified in "8.3 Correct fineness" of JIS L1017:2002 "Test methods for synthetic fiber tire cords". For a cord formed of one yarn, it corresponds to the fineness of one yarn, and for a cord formed of multiple yarns, it corresponds to the sum of the finenesses of the multiple yarns.
For example, the total fineness of the cord structure 1440 dtex/1 (the cord is composed of only a single yarn having a fineness of 1440 dtex) is 1440 dtex, and the total fineness of the cord structure 1440 dtex/2 (the cord is composed of two single yarns having a fineness of 1440 dtex twisted together) is 2880 dtex.
The carcass cord can be made of fibers, and the fibers constituting the carcass cord can be conventionally known, for example, polyester fibers such as PET (polyethylene terephthalate) fibers and PEN (polyethylene naphthalate) fibers, polyamide fibers such as nylon 6 fibers and nylon 66 fibers, and aramid fibers, and are preferably a single-ply cord made of one twisted yarn or a double-ply cord made of two twisted yarns. The fibers constituting the carcass cord may be recycled from old or scrap products (recycled materials), or may be synthesized from biomass (biomass materials).
The carcass may be one-ply or two-ply, but is preferably one-ply. It is believed that the use of a one-ply carcass can reduce the tire weight, compared to the use of a two-ply carcass and achieve LRR construction.
In addition, by using such a carcass portion, the axial bending rigidity can be sufficiently reduced, allowing the side portions to bend sufficiently when a camber angle is applied during cornering, and allowing more of the tread surface to contact the ground, which is believed to improve steering stability.
The specific diameter (cord gauge) of the carcass cord is preferably 0.70 mm or less, 0.68 mm or less, 0.65 mm or less, or 0.63 mm or less, from the viewpoint of the effect of the present invention (improvement of tire durability during high-speed running). On the other hand, from another viewpoint (ride comfort), the diameter is preferably 0.55 mm or more, 0.60 mm or more, 0.63 mm or more, or 0.68 mm or more.
In the above, the " diameter of the carcass cord" can be measured in accordance with the method specified in JIS L1017:2002 "Testing method for synthetic fiber tire cords".
The number of cords per 50 mm width of the carcass cord (ends: cords/5 cm) is preferably 40 cords /5 cm or more, and more preferably 45 cords /5 cm or more. The upper limit is, for example, preferably 60 cords /5 cm or less, and more preferably 55 cords /5 cm or less.
The ends of the carcass cords can be measured as the number of cords present within a width of 5 cm in the direction perpendicular to the longitudinal direction.

[3] Embodiments

Hereinafter, the present invention will be described in detail based on the embodiments.

1. Tire according to the present embodiment

Figure 2 is a schematic cross-sectional view illustrating a tire according to this embodiment. In Figure 2, the vertical direction is the radial direction of the tire, the horizontal direction is the rotational axis direction of the tire, and the direction perpendicular to the paper surface is the circumferential direction of the tire. Note that the shape of this tire is symmetrical with respect to the equatorial plane except for the tread pattern, so Figure 2 shows 1/4 of the entire tire.
As shown in Figure 2, the tire 1 comprises a tread 2, a pair of sidewalls 3, a pair of chafers 4, a pair of beads 5, an inner liner 6, a carcass 7, a belt 8, a pair of fillers 9, and a band 10, with the carcass 7, the belt 8, the band 10, and the tread 2 being arranged from the inside to the outside in the tire radial direction.
With this configuration, as described above, a PET band cord is used as the band cord, a tread is formed using an

appropriately blended rubber composition for a tread, and further, the product of the tread thickness, the content of styrene in the SBR, and the diameter of the band cord is appropriately controlled, thereby it is believed that it is possible to improve the comprehensive performance of the tire, including the rolling resistance, and the durability and steering stability during high-speed running.

2. Rubber composition for tread

In this embodiment, the rubber composition for tread can be obtained by kneading various compounding materials such as a rubber component, a reinforcing material, an anti-aging agent, oil, and a resin component.

(1) Compounding materials

(a) Rubber component

The rubber component in the rubber composition for tread is not particularly limited, and for example, diene-based rubbers such as natural rubber (NR), styrene butadiene rubber (SBR), butadiene rubber (BR), isoprene rubber (IR), acrylonitrile butadiene rubber (NBR), chloroprene rubber (CR), and butyl rubber (IIR) may be used. These may be used alone or in combination of two or more kinds. In the present invention, the combination of NR, SBR and BR is preferred.

(a-1) SBR

The weight average molecular weight of SBR is, for example, more than 100,000 and less than 2,000,000. The styrene content in SBR is as described above. The vinyl content (amount of 1,2-bonded butadiene units) of SBR is, for example, preferably more than 5% by mass, more preferably more than 10 % by mass, and further preferably more than 15 % by mass. On the other hand, it is preferably less than 70 % by mass, more preferably less than 40 % by mass, and further preferably less than 30 % by mass. The structure of SBR (measurement of styrene content and vinyl content) can be identified using, for example, a JNM-ECA series device manufactured by JEOL Ltd.

The SBR is not particularly limited, and for example, emulsion polymerized styrene butadiene rubber (E-SBR), solution polymerized styrene butadiene rubber (S-SBR), and the like can be used. SBR may be either non-modified SBR or modified SBR. Further, hydrogenated SBR obtained by hydrogenating the butadiene part in SBR may be used. The hydrogenated SBR may be obtained by subsequently hydrogenating the BR part in SBR, or a similar structure may be obtained by copolymerization of styrene, ethylene, and butadiene.

The modified SBR is preferably an SBR having a functional group that interacts with a filler such as silica. Examples thereof include end-modified SBR (end-modified SBR having the above functional group at the terminal) in which at least one end of the SBR is modified with a compound having the above functional group (modifying agent),

main chain modified SBR having the functional group in the main chain,
main chain terminal modified SBR having the functional group at the main chain and the terminal (for example, a main chain end modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

As the modified SBR, for example, SBR modified with a compound (modifying agent) represented by the following formula can be used.

[Chemical formula 1]

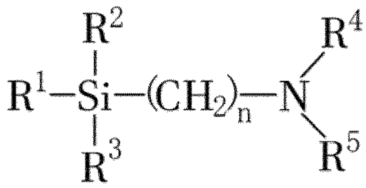

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure together with the nitrogen atom. n represents an integer.
As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.
As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).
Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.
Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine; diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3-(methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl)

aminoethyltrimethoxysilane, and N, N-bis (trimethylsilyl) aminoethyltriethoxysilane;

(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as

N-methyl -ε-caprolactam, N-phenyl-ε-caprolactum, N-methyl-ω-laurilolactum,
N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., ENEOS Materials Co., Ltd., Asahi Kasei Co., Ltd., Nippon Zeon Co., Ltd., etc. can be used. Note that SBR may be used alone or in combination of two or more.

The content of SBR in 100 parts by mass of the rubber component is preferably 10 parts by mass or more, more preferably 20 parts by mass or more, and further preferably 30 parts by mass or more. The upper limit is, for example, preferably 70 parts by mass or less, more preferably 65 parts by mass or less, and further preferably 60 parts by mass or less.

(a-2) Isoprene-based rubber

Examples of isoprene-based rubber include natural rubber (NR), isoprene rubber (IR), reformed NR, modified NR, and modified IR. Among them, NR is preferred from the standpoint of excellent strength.

As the NR, for example, SVR-L, SIR20, RSS#3, TSR20, etc., which are common in the tire industry, can be used. As the IR, there is no particular limitation, and for example, IR2200 manufactured by Nippon Zeon Co., Ltd. and the like, which are common in the tire industry, can be used. As the reformed NR, deproteinized natural rubber (DPNR), ultra pure natural rubber (UPNR), and the like can be used. As the modified NR, epoxidized natural rubber (ENR), hydrogenated natural rubber (HNR), grafted natural rubber, and the like can be used. As the modified IR, epoxidized isoprene rubber, hydrogenated isoprene rubber, grafted isoprene rubber, and the like can be used. These may be used alone or in combination of two or more.

In the rubber composition for tread, the content of the isoprene-based rubber in 100 parts by mass of the rubber component is preferably 5 parts by mass or more, 10 parts by mass or more, 15 parts by mass or more, or 20 parts by mass or more. On the other hand, it is preferably 25 parts by mass or less, 20 parts by mass or less, or 15 parts by mass or less.

(a-3) BR

The weight average molecular weight of BR is, for example, more than 100,000 and less than 2,000,000. The vinyl content of BR is, for example, more than 1% by mass and less than 30% by mass. The cis content of BR is, for example, more than 1% by mass and 98% by mass or less. The trans content of BR is, for example, more than 1% by mass and less than 60% by mass. Note that the cis content can be measured by infrared absorption spectroscopy.

The BR is not particularly limited, and BR with a high cis content (cis content of 90% or more), BR with a low cis content, BR containing syndiotactic polybutadiene crystals, etc. can be used. The BR may be either unmodified BR or modified BR. As the modified BR, for example, a BR modified with a compound (modifying agent) represented by the following formula can be used.

[Chemical formula 2]

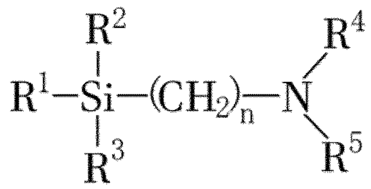

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure together with the nitrogen atom. n represents an integer.

Examples of the modified BR modified with the compound (modifying agent) represented by the above formula include BR whose polymerization end (active end) is modified with the compound represented by the above formula.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified BR, a modified BR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method. These modified BR may be used alone or in combination of two or more.

As the BR, for example, products manufactured by Ube Industries, Ltd., ENEOS Materials Co., Ltd., Asahi Kasei Co., Ltd., Nippon Zeon Co., Ltd., etc. can be used.
In the rubber composition for tread, the content of BR in 100 parts by mass of the rubber component is preferably 10 parts by mass or more, 15 parts by mass or more, or 25 parts by mass or more. On the other hand, it is preferably 30 parts by mass or less, 25 parts by mass or less, or 15 parts by mass or less.

(a-4) Other rubber components

The rubber composition for tread may contain, as other rubber components, rubbers (polymers) that are commonly used in the manufacture of tires, such as nitrile rubber (NBR), as necessary.
The raw materials (monomers) of the above-mentioned synthetic rubbers such as SBR and BR may be derived from underground resources such as petroleum and natural gas, or may be recycled from rubber products such as tires or non-rubber products such as polystyrene.
Monomers obtained by recycling (recycled monomers) are not particularly limited, and examples thereof include recycled isoprene, recycled butadiene, and recycled aromatic vinyl. Examples of the above-mentioned butadiene include 1,2-butadiene and 1,3-butadiene. Examples of the aromatic vinyl include, but are not particularly limited to, styrene. Among them, it is preferable to use recycle-derived isoprene (recycled isoprene), recycle-derived butadiene (recycled butadiene), and/or recycle-derived styrene (recycled styrene) as raw materials.
The method for producing the recycled monomer is not particularly limited, and examples thereof include synthesis from recycle-derived naphtha obtained by decomposing rubber products such as tires. The method for producing the recycle-derived naphtha is also not particularly limited, and examples thereof include decomposing rubber products such as tires under high temperature and pressure, decomposing with microwaves, or mechanically crushing and then extracting.
Furthermore, the raw materials (monomers) of synthetic rubbers such as IR, SBR, and BR may be derived from biomass. Here, biomass refers to substances derived from natural resources such as plants. Examples of biomass include, but are not limited to, agricultural, sugar, wood chips, plant residues after useful components are obtained, plant-derived ethanol, and biomass naphtha. Examples of monomers derived from biomass (biomass monomers) include, but are not limited to, butadiene derived from biomass and aromatic vinyl derived from biomass. Examples of butadiene include 1,2-butadiene and 1,3-butadiene. Examples of aromatic vinyl include, but are not limited to, styrene. In addition, the method for producing biomass monomers is not particularly limited, and examples include biological and/or chemical and/or physical conversion of animals and plants. A representative example of biological conversion is fermentation by microorganisms, and examples of chemical and/or physical conversion include those using catalysts, those using high heat, those using high pressure, those using electromagnetic waves, those using critical liquids, and combinations thereof.
The polymer synthesized from a biomass monomer component (biomass polymer) is not particularly limited, and examples thereof include polybutadiene rubber synthesized from butadiene derived from biomass, aromatic vinyl/butadiene copolymer synthesized from butadiene derived from biomass and/or aromatic vinyl derived from biomass, etc. Examples of the aromatic vinyl/butadiene copolymer include styrene butadiene rubber synthesized from butadiene derived from biomass and/or styrene derived from biomass.
Whether the raw material of a polymer is derived from biomass can be determined by the percent modern carbon (pMC) measured in accordance with ASTM D6866-10.
The pMC is a ratio of the $^{14}C$ concentration of a sample to the $^{14}C$ concentration of a modern standard reference, and this value is used as an index of the biomass ratio of a compound (rubber). The significance of this value will be described below.
In one mole of carbon atoms ($6.02 \times 10^{23}$), there are about $6.02 \times 10^{11}$ $^{14}C$, which is about one trillionth of the number of normal carbon atoms. $^{14}C$ is called a radioisotope, and its half-life is 5730 years, and it decreases regularly. It

takes 226,000 years for all of them to decay. Therefore, in fossil fuels such as coal, oil, and natural gas, which are thought to have passed more than 226,000 years after carbon dioxide in the atmosphere was absorbed and fixed to plants and other things, all of the $^{14}C$ elements that were contained in them at the time of fixation have decayed. Therefore, in the present 21st century, fossil fuels such as coal, oil, and natural gas do not contain any $^{14}C$ elements at all. Therefore, chemical substances produced using these fossil fuels as raw materials do not contain any $^{14}C$ elements at all.

On the other hand, $^{14}C$ is constantly produced by nuclear reactions caused by cosmic rays in the atmosphere, and the amount of $^{14}C$ in the atmospheric environment on Earth is constant, balancing with the decrease due to radioactive decay. Therefore, the $^{14}C$ concentration of materials derived from biomass resources circulating in the current environment is approximately $1 \times 10^{-12}$mol% relative to the total C atoms, as mentioned above. Therefore, the difference between these values can be used to calculate the ratio (biomass ratio) of compounds derived from natural resources (compounds derived from biomass resources) in a certain compound (rubber).

This $^{14}C$ is generally measured as follows. Accelerator mass spectrometry based on a tandem accelerator is used to measure the $^{13}C$ concentration ($^{13}C/^{12}C$) and the $^{14}C$ concentration ($^{14}C/^{12}C$). In the measurement, the $^{14}C$ concentration in circulating carbon in nature as of 1950 is adopted as the modern standard reference for the $^{14}C$ concentration. As a specific standard substance, an oxalic acid standard provided by NIST (National Institute of Standards and Technology) is used. The specific radioactivity of carbon (radioactivity of $^{14}C$ per gram of carbon) in this oxalic acid is separated for each carbon isotope, and $^{13}C$ is corrected to a constant value, and the value corrected for decay from 1950 to the date of measurement is used as the standard $^{14}C$ concentration value (100%). The ratio of this value to the value of the actually measured sample is the pMC value.

Therefore, if rubber is made from 100% biomass (natural) derived materials, it will show a value of about 110 pMC, as it is often not 100 under normal conditions, although there are regional differences. On the other hand, when the $^{14}C$ concentration is measured for chemical substances derived from fossil fuels such as petroleum, it will show a value of about 0 pMC (for example, 0.3 pMC). This value corresponds to the biomass ratio of 0% mentioned above.

For the above reasons, it is preferable from the standpoint of environmental protection (sustainability) to use a material such as rubber having a high pMC value, that is, a material such as rubber having a high biomass ratio for the rubber composition.

(b) Compounding materials other than rubber components (b-1) Filler

As described above, the rubber composition for tread contains silica as a reinforcing agent, and may contain other fillers, such as carbon black, calcium carbonate, talc, alumina, clay, aluminum hydroxide, and mica. When silica is used, it is preferable to use it in combination with a silane coupling agent.

In the rubber composition for tread, the compounding amount of the filler is, as described above, more than 75 parts by mass of silica per 100 parts by mass of the rubber component, and the total compounding amount with other fillers is preferably 80 parts by mass or more, 85 parts by mass or more per 100 parts by mass of the rubber component. On the other hand, from the viewpoint of dispersibility in the rubber composition, it is preferably 150 parts by mass or less, 100 parts by mass or less, or 85 parts by mass or less.

(b-1-1) Silica

In the rubber composition for tread, the content of silica per 100 parts by mass of the rubber component is as described above.

From the viewpoint of obtaining good durability, the BET specific surface area of the silica is preferably more than 100 $m^2/g$, and more preferably more than 130 $m^2/g$, and is preferably less than 250 $m^2/g$, and more preferably less than 200 $m^2/g$. The BET specific surface area is the $N_2$ SA value measured by the BET method according to ASTM D3037-93.

The silica is not particularly limited, and for example, silica commonly used in the tire industry, such as silica prepared by a dry method (anhydrous silica) or silica prepared by a wet method (hydrated silica), can be used. Commercially available products include products from Evonik Industries Co., Ltd., Rhodia Co., Ltd., Tosoh Silica Co., Ltd., Solvay Japan Co., Ltd., Tokuyama Co., Ltd., etc.

The raw material of silica is not particularly limited, and may be, for example, a mineral-derived raw material such as quartz, a biological raw material such as rice husk (for example, silica made from biomass materials such as rice husk), or silica recycled from a product containing silica. Among them, hydrated silica prepared by a wet method is preferred because it has a large amount of silanol groups. From the viewpoint of environmental protection, sustainable silica (silica made from biomass materials or silica recycled from a product containing silica) is preferred.

Silica made from biomass materials (biomass silica) can be obtained, for example, by extracting silicate from rice husk ash obtained by burning rice husks using a sodium hydroxide solution, and then reacting the silicate with sulfuric acid in the same manner as conventional wet-process silica to produce a silicon dioxide precipitate, which is then filtered, washed with water, dried, and pulverized.

The silica recycled from a product containing silica (recycled silica) can be, for example, silica recycled from a product containing silica, such as electronic parts such as semiconductors, tires, desiccants, and filtering materials such as diatomaceous earth. The recycle method is not particularly limited, and examples include pyrolysis and decomposition by electromagnetic waves. Among them, silica recycled from electronic parts such as semiconductors or tires is preferred.
When silica crystallizes, it does not dissolve in water and its component silicic acid cannot be used. By controlling the combustion temperature and combustion time, the crystallization of silica in rice husk ash can be suppressed (see JP 2009-2594 A, Akita Prefectural University Web Journal B/2019, vol. 6, pp. 216-222, etc.).
As an amorphous silica extracted from rice husks, commercially available products from Wilmar Co., etc. can be used.
These silicas may be used alone or in combination of two or more. From the viewpoint of environmental protection (sustainability), it is preferable to use sustainable silica such as biomass silica or recycled silica.

(b-1-2) Silane coupling agent

When silica is used, it is preferable to use a silane coupling agent in combination to increase the dispersibility of the silica and to improve the mechanical properties and moldability by reacting with the silica.
The silane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl) disulfide, bis(3-trimethoxysilylpropyl) disulfide, bis(2-trimethoxysilylethyl)disulfide, bis(4-trimethoxysilylbutyl) disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. Among these, silane coupling agents having a thiocarbonyl group such as the above-mentioned NXT are preferred. These may be used alone or in combination of two or more kinds.

As the silane coupling agent, for example, products of Evonik Industries Co., Ltd., Momentive Co., Ltd., Shin-Etsu Silicone Co., Ltd., Tokyo Chemical Industry Co., Ltd., Azumax Co., Ltd., Dow Corning Toray Co., Ltd., etc. can be used.
The content of the silane coupling agent is preferably more than 3 parts by mass, 5 parts by mass or more, 7 parts by mass or more, or 8 parts by mass or more relative to 100 parts by mass of silica. On the other hand, it is preferably less than 15 parts by mass, 12 parts by mass or less, 9 parts by mass or less, or 8 parts by mass or less.

(b-1-3) Carbon black

Carbon black is preferably used for improving the crack growth resistance, durability, resistance to deterioration due to ultraviolet light, and the like of the tire.
From the viewpoint of reinforcing rubber, the nitrogen adsorption specific surface area ($N_2SA$) of carbon black is preferably, for example, 30$m^2$/g or more, more preferably 50$m^2$/g or more, and further preferably 60$m^2$/g or more. On the other hand, from the viewpoint of heat generation, it is preferably 250$m^2$/g or less, more preferably 150 $m^2$/g or less, and further preferably 120$m^2$/g or less. The nitrogen adsorption specific surface area of carbon black is measured in accordance with ASTM D4820-93.
From the viewpoint of rubber rigidity, the dibutyl phthalate (DBP) absorption of carbon black is preferably, for example, 50 ml/100 g or more, and more preferably 100 ml/100 g or more. On the other hand, from the viewpoint of rubber deformation followability, the DBP absorption of carbon black is preferably 250 ml/100 g or less, and more preferably 150 ml/100 g or less. The DBP absorption of carbon black is measured in accordance with ASTM D2414-93.
The carbon black is not particularly limited, and examples thereof include furnace blacks (furnace carbon blacks) such as SAF, ISAF, HAF, MAF, FEF, SRF, GPF, APF, FF, CF, SCF, and ECF; acetylene blacks (acetylene carbon blacks); thermal blacks (thermal carbon blacks) such as FT and MT; and channel blacks (channel carbon blacks) such as EPC, MPC, and CC. Examples of product numbers include N134, N110, N220, N234, N219, N339, N330, N326, N351, N550,

and N762. These may be used alone or in combination of two or more.

The raw material for carbon black may be a biomass material such as lignin, vegetable oil, or a pyrolysis oil obtained by pyrolyzing rubber products containing carbon black, such as waste tires (recycled carbon black), in addition to mineral oil. The use of such sustainable carbon black is preferable from the viewpoint of environmental protection.

The carbon black may be produced by combustion, such as in a furnace process, by hydrothermal carbonization (HTC), or by pyrolysis of methane, such as in a thermal black process.

As commercially available products, products of Asahi Carbon Co., Ltd., Cabot Japan Co., Ltd., Tokai Carbon Co., Ltd., Mitsubishi Chemical Co., Ltd., Lion Corporation, Nippon Steel Carbon Co., Ltd., Columbia Carbon Co., Ltd., etc. can be used. These may be used alone or in combination of two or more kinds.

The content of carbon black per 100 parts by mass of the rubber component is preferably 3 parts by mass or more, or 5 parts by mass or more. On the other hand, it is preferably 15 parts by mass or less, 10 parts by mass or less, or 5 parts by mass or less.

(b-1-4) Other fillers

The rubber composition for tread may further contain, in addition to the above-mentioned carbon black and silica, may further contain fillers commonly used in the tire industry, such as graphite, calcium carbonate, talc, alumina, clay, aluminum hydroxide, mica, and magnesium sulfate. The content of these is, for example, more than 0.1 parts by mass and less than 150 parts by mass per 100 parts by mass of the rubber component.

(b-2) Softener (plasticizer) component

In consideration of proper dispersion of powder materials during kneading, it is preferable to use a softener component as necessary in the rubber composition. The softener component here refers to a material (plasticizer component) that imparts plasticity to the rubber component, and is a concept that includes both softener components that are liquid at 25°C and softener components that are solid at 25°C.

Examples of softener components include resin components, oils, liquid polymers (liquid rubbers), and ester-based plasticizers. These softener components may be derived from mineral resources such as petroleum and natural gas, may be derived from biomass, or may be derived from naphtha recycled from rubber products or non-rubber products. In addition, low molecular weight hydrocarbon components obtained by pyrolysis and extraction of used tires or products containing various components may be used as softener components. Among these, softener components derived from biomass or recycled materials are preferred as sustainable softener components.

These softener components may be used alone or in combination of two or more. The content of the softener component per 100 parts by mass of the rubber component is preferably 15 parts by mass or more, more preferably 30 parts by mass or more, and further preferably 55 parts by mass or more. The upper limit is, for example, preferably 70 parts by mass or less, and more preferably 60 parts by mass or less. The content of the softener component includes the amount of oil contained in the rubber (oil-extended rubber) and the like.

(b-2-1) Oil

Examples of the oil include mineral oil, vegetable oil, and animal oil. From the viewpoint of life cycle assessment, waste oil after use in rubber mixers or engines, or refined waste cooking oil used in restaurants may also be used.

(b-2-1-1) Mineral oil

Mineral oil refers to oil derived from mineral resources such as petroleum and natural gas. Examples of mineral oil include paraffinic oil (mineral oil), naphthenic oil, and aromatic oil.

Specific examples of mineral oils include Mild Extract Solvated (MES), Distillate Aromatic Extract (DAE), Treated Distillate Aromatic Extract (TDAE), Treated Residual Aromatic Extract (TRAE), and Residual Aromatic Extract (RAE).

In addition, to be environmentally friendly, oils with low polycyclic aromatic compound (PCA) content may be used. Examples of the oils with low PCA include MES, TDAE, and heavy naphthenic oils.

Examples of commercially available mineral oils include paraffinic, aromatic, and naphthenic oils. Examples of such products that can be used include those manufactured by Idemitsu Kosan Co., Ltd., Sankyo Yuka Kogyo Co., Ltd., ENEOS Co., Ltd., Orisoi Co., Ltd., H&R Co., Ltd., Toyokuni Oil Co., Ltd., Showa Shell Sekiyu Co., Ltd., and Fuji Kosan Co., Ltd. These may be used alone or in combination of two or more kinds.

(b-2-1-2) Vegetable oil

Examples of vegetable oils include linseed oil, rapeseed oil, safflower oil, soybean oil, corn oil, cottonseed oil, rice bran oil, tall oil, sesame oil, perilla oil, castor oil, tung oil, pine oil, pine tar oil, sunflower oil, and coconut oil, palm oil, palm kernel oil, olive oil, camellia oil, jojoba oil, macadamia nut oil, peanut oil, grapeseed oil, and wood wax.

Furthermore, vegetable oils also include refined oils (salad oil, etc.) obtained by refining each of the above oils, transesterified oils obtained by transesterification, hydrogenated oils, thermopolymerized oils obtained by thermal polymerization, oxidized polymerized oils obtained by oxidation, waste cooking oils that have been recovered from edible oils, and the like. Note that the vegetable oil may be liquid or solid at room temperature (25°C). These may be used alone or in combination of two or more.

The vegetable oil preferably contains acylglycerol, and more preferably contains triacylglycerol. Here, acylglycerol refers to a compound in which a hydroxyl group of glycerin and a fatty acid are ester-bonded. The acylglycerol is not particularly limited, and may be 1-monoacylglycerol, 2-monoacylglycerol, 1,2-diacylglycerol, 1,3-diacylglycerol, or triacylglycerol. Furthermore, the acylglycerol may be a monomer, a dimer, or a polymer of trimer or more. Dimer or more acylglycerols can be obtained by thermal polymerization, oxidative polymerization, or the like. The acylglycerol may be liquid or solid at room temperature (25°C).

The method for confirming whether acylglycerol is contained in the rubber composition is not particularly limited, but it can be confirmed by $^1$H-NMR measurement. For example, a rubber composition containing triacylglycerol is immersed in deuterated chloroform at room temperature (25°C) for 24 hours to remove the rubber composition, and then $^1$H-NMR is measured at room temperature, with setting, signals nearby 5.26 ppm, nearby 4.28 ppm, and nearby 4.15 ppm are observed, when the tetramethylsilane (TMS) signal is set to 0.00 ppm. Since the signals are presumed to be signals originate from the hydrogen atom bonded to the carbon atom adjacent to the oxygen atom of the ester group, the content of acylglycerol can be confirmed. Note that "nearby" here refers to a range of $\pm 0.10$ ppm.

The fatty acid is not particularly limited, and may be an unsaturated fatty acid or a saturated fatty acid. Examples of the unsaturated fatty acid include monounsaturated fatty acids such as oleic acid, and polyunsaturated fatty acids such as linoleic acid and linolenic acid. Examples of the saturated fatty acid include butyric acid and lauric acid.

Among them, a fatty acid with few double bonds, i.e., a saturated fatty acid or a monounsaturated fatty acid is preferable, and oleic acid is preferable. As the vegetable oil containing such a fatty acid, for example, a vegetable oil containing a saturated fatty acid or a monounsaturated fatty acid may be used, or a vegetable oil modified by transesterification or the like may be used. In addition, to produce a vegetable oil containing such a fatty acid, a plant may be improved by breeding, genetic recombination, genome editing, or the like.

Examples of vegetable oils include products commercially available from Idemitsu Kosan Co., Ltd., Sankyo Yuka Kogyo Co., Ltd., ENEOS Co., Ltd., Orisoi Co., Ltd., H&R Co., Ltd., Toyokuni Oil Co., Ltd., Fuji Kosan Co., Ltd., and Nisshin Oillio Group Co., Ltd.

(b-2-2) Liquid rubber

Liquid rubber is a polymer that is in a liquid state at room temperature (25°C), and is a rubber component that can be extracted from a vulcanized tire by acetone extraction. Examples of the liquid rubber include farnesene-based polymers, liquid diene polymers, and hydrogenated products thereof.

The farnesene-based polymer is a polymer obtained by polymerizing farnesene, and has a structural unit based on farnesene. Farnesene includes isomers such as $\alpha$-farnesene ((3E, 7E) -3,7,11-trimethyl-1,3,6,10-dodecatetraene) and $\beta$-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-equivalent weight average molecular weight (Mw) measured by gel permeation chromatography (GPC) of, for example, more than $1.0 \times 10^3$ and less than $2.0 \times 10^5$. Here, Mw of the liquid diene polymer is a polystyrene conversion value measured by gel permeation chromatography (GPC).

As the liquid rubber, for example, products manufactured by Kuraray Co., Ltd., Clay Valley Co., Ltd., etc. can be used.

(b-2-3) Resin component

The resin component also functions as a tackifying component, and may be solid or liquid at room temperature. Specific examples of the resin components include rosin-based resin, styrene resin, coumaron-based resin, terpene resin, C5 resin, C9 resin, C5C9 resin, and acrylic resin, and two or more of these may be used in combination. These resin

components may be provided with a modified group capable of reacting with silica, etc., as necessary.

Rosin-based resin is a resin whose main component is rosin acid obtained by processing pine resin. This rosin-based resin (rosins) can be classified according to the presence or absence of modification, and can be classified into unmodified rosin (unmodified rosin) and modified rosin (rosin derivative). Examples of unmodified rosin include tall rosin (also known as tall oil rosin), gum rosin, wood rosin, disproportionated rosin, polymerized rosin, hydrogenated rosin, and other chemically modified rosins. The modified rosin is a modified version of unmodified rosin, and examples thereof include rosin esters, unsaturated carboxylic acid-modified rosins, unsaturated carboxylic acid-modified rosin esters, amide compounds of rosin, and amine salts of rosin.

The styrene-based resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more of the styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; α, β-unsaturated carboxylic acids such as maleic anhydride, and acid anhydrides thereof.

Among coumaron-based resins, coumaron indene resin is preferred. Coumaron indene resin is a resin containing coumaron and indene as monomer components that constitute the skeleton (main chain) of the resin. In addition to coumaron and indene, a monomer component such as styrene, α-methylstyrene, methylindene, and vinyltoluene may be contained in the skeleton.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as a hydrogenated terpene resin obtained by hydrogenating the terpene resin. Examples of the terpene phenol include a resin obtained by copolymerizing the above-mentioned terpene compound and the phenolic compound, and a resin obtained by hydrogenating above-mentioned resin. Specifically, a resin obtained by condensing the above-mentioned terpene compound, the phenol compound and the formalin can be mentioned. Examples of the phenolic compound include phenol, bisphenol A, cresol, and xylenol. Examples of the aromatic-modified terpene resin include a resin obtained by modifying a terpene resin with an aromatic compound, and a resin obtained by hydrogenating above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumaron, and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The "C9 resin" refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene (AMS resin) or styrene or a copolymer of α-methylstyrene and styrene is preferable because it is economical, easy to process, and excellent in heat generation properties. A copolymer of α-methylstyrene and styrene is more preferred. As the aromatic

vinyl-based resin, for example, those commercially available from Kraton Co., Eastman Chemical Co., etc. can be used.

The "C5C9 resin" refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA Corporation, etc. can be used.

Although the acrylic resin is not particularly limited, for example, a solvent-free acrylic resin can be used.

As the solvent-free acrylic resin, a (meth) acrylic resin (polymer) synthesized by a high-temperature continuous polymerization method (high-temperature continuous lump polymerization method: a method described in US 4,414,370 B, JP 84-6207 A, JP 93-58805 A, JP 89-313522 A, US 5,010,166 B, Toa Synthetic Research Annual Report TREND2000 No. 3, p42-45, etc.) without using polymerization initiators, chain transfer agents, organic solvents, etc. as auxiliary raw materials as much as possible, can be mentioned. In the present invention, (meth) acrylic means methacrylic and acrylic.

Examples of monomer components constituting the acrylic resin include (meth)acrylic acid, (meth)acrylic acid esters (alkyl esters, aryl esters, aralkyl esters, etc.), (meth)acrylamide, and (meth)acrylic acid derivatives such as (meth) acrylamide derivatives.

As the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth)acrylic acid or (meth)acrylic acid derivative.

The acrylic resin may be a resin composed of only a (meth) acrylic component or a resin also having a component other than the (meth) acrylic component. The acrylic resin may have a hydroxyl group, a carboxyl group, a silanol group, or the like.

Examples of the resin component which can be used include products of Maruzen Petrochemical Co., Ltd., Sumitomo Bakelite Co., Ltd., Yasuhara Chemical Co., Ltd., Tosoh Corporation, Rutgers Chemicals Co., Ltd., BASF Co., Ltd., Kraton Co., Ltd., Nitto Chemical Co., Ltd., Nippon Shokubai Co., Ltd., ENEOS Co., Ltd., Arakawa Chemical Industry Co., Ltd., and Taoka Chemical Industry Co., Ltd.

(b-3) Wax

The rubber composition may contain a wax. The content of the wax is, for example, preferably 0.5 to 20 parts by mass, more preferably 1.0 to 15 parts by mass, and further preferably 1.5 to 10 parts by mass, based on 100 parts by mass of the rubber component.

The wax is not particularly limited, and any wax commonly used in the tire industry can be suitably used. Examples of the wax include mineral waxes and vegetable-derived waxes. Mineral waxes refer to waxes derived from mineral resources such as oil and natural gas. Vegetable waxes refer to waxes derived from natural resources such as plants. Among them, mineral waxes are preferred.

Examples of the wax derived from plants include rice wax, carnauba wax, and candelilla wax. Examples of the mineral wax include paraffin wax, microcrystalline wax, and selected special waxes thereof, and paraffin wax is preferred. In the present invention, the wax does not contain stearic acid.

As the wax, for example, commercially available waxes from Ouchi Shinko Chemical Industry Co., Ltd., Nippon Seiro Co., Ltd., Paramelt Co., Ltd., etc. may be used. These waxes may be used alone or in combination of two or more kinds.

(b-4) Anti-aging agents

The rubber composition may contain an anti-aging agent. The content of the anti-aging agent is, for example, preferably more than 1 part by mass, and less than 10 parts by mass, relative to 100 parts by mass of the rubber component.

The anti-aging agent is not particularly limited, and examples thereof include naphthylamine-based anti-aging agents such as phenyl-α-naphthylamine; diphenylamine-based anti-aging agents such as octylated diphenylamine and 4,4'-bis(α,α'-dimethylbenzyl)diphenylamine; p-phenylenediamine-based anti-aging agents such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline-based anti-aging agents such as 2,2,4-trimethyl-1,2-dihydroquinoline polymers; monophenol-based anti-aging agents such as 2,6-di-t-butyl-4-methylphenol and styrenated phenol; and bis-, tris-, and polyphenol-based anti-aging agents such as tetrakis-[methylene-3-(3',5'-di-t-butyl-4'-hydroxyphenyl)propionate]methane. Among these, p-phenylenediamine-based anti-aging agents and quinoline-based anti-aging agents are preferred, and N-(1,3-dimethylbutyl)-N'-phenyl-p-phenylenediamine and 2,2,4-trimethyl-1,2-dihydroquinoline polymers are more preferred. These may be used alone or in combination of two or more kinds.

As commercially available products, for example, products from Seiko Chemical Co., Ltd., Sumitomo Chemical Co., Ltd., Ouchi Shinko Chemical Co., Ltd., Flexsys Co., Ltd., etc. can be used.

(b-5) Processing aids

The rubber composition may contain a processing aid. Examples of the processing aid include metal salts (compounds in which hydrogen atoms of an acid are replaced with metal ions), fatty acid amides, amide esters, and fatty acid esters. These may be used alone or in combination of two or more. Among these, metal salts and fatty acid amides are preferred, and metal salts are more preferred.

Examples of metals used in the metal salt include alkali metals such as potassium and sodium, and alkaline earth metals such as calcium and barium. Magnesium, zinc, nickel, molybdenum, etc. can also be used. Among these, alkali metals are preferred.

Examples of acids used in the metal salt include fatty acids such as lauric acid, myristic acid, and palmitic acid. In addition, boric acid, carbonic acid, hydrochloric acid, nitric acid, sulfuric acid, and the like can also be used.

Examples of commercially available processing aids that can be used include products from Kishida Chemical Co., Ltd., Kenei Pharmaceutical Co., Ltd., Struktol Co., Ltd., and Performance Additives Co., Ltd.

The content of the processing aid is preferably 1 part by mass or more, and more preferably 2 parts by mass or more, relative to 100 parts by mass of the rubber component. The upper limit is, for example, preferably 6 parts by mass or less, and more preferably 4 parts by mass or less.

(b-6) Lubricant (stearic acid)

The rubber composition may contain a lubricant. As the lubricant, a lubricant based on a fatty acid derivative such as stearic acid can be preferably used. As the stearic acid, a conventionally known one can be used. Specifically, for example, products of NOF Corporation, Kao Corporation, Fujifilm Wako Pure Chemical Co. Ltd., Chiba Fatty Acid Co. Ltd., etc. can be used. In addition, Struktol WB16 manufactured by Struktol Co., Ltd., and the like can also be used.

The content of stearic acid is, for example, preferably more than 0.5 parts by mass, and more preferably 2.0 parts by mass or more, relative to 100 parts by mass of the rubber component. The upper limit is preferably less than 10.0 parts by mass.

(b-7) Zinc oxide

The rubber composition may contain zinc oxide. The content of zinc oxide is, for example, preferably more than 0.5 parts by mass, and more preferably 2.0 parts by mass or more, relative to 100 parts by mass of the rubber component. The upper limit is preferably less than 10 parts by mass. As the zinc oxide, a conventionally known product can be used, and for example, products of Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc. can be used.

(b-8) Crosslinking agents and vulcanization accelerators

The rubber composition preferably contains a crosslinking agent such as sulfur. The content of the crosslinking agent is, for example, preferably more than 0.1 parts by mass, and more preferably 1.5 parts by mass or more, relative to 100 parts by mass of the rubber component. The upper limit is preferably less than 10.0 parts by mass. The sulfur content is the pure sulfur content, and in the case of using insoluble sulfur, it is the content excluding the oil content.

Examples of sulfur include powdered sulfur, precipitated sulfur, colloidal sulfur, insoluble sulfur, highly dispersible sulfur, soluble sulfur, and the like which are generally used in the rubber industry. These may be used alone or in combination of two or more kinds.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Cross-linking agents other than sulfur may be used. Specific examples of the cross-linking agent other than sulfur include vulcanizing agents containing a sulfur atom such as Tackirol V200 manufactured by Taoka Chemical Industry Co., Ltd., DURALINK HTS (1,6-hexamethylene-sodium dithiosulfate dihydrate) manufactured by Flexsys Co., Ltd., and KA9188 (1,6-bis (N, N'-dibenzylthiocarbamoyldithio)hexane; hybrid crosslinking agent) manufactured by Lanxess Co., Ltd., and organic peroxides such as dicumylperoxide.

The rubber composition preferably contains a vulcanization accelerator. The content of the vulcanization accelerator is, for example, preferably more than 0.3 parts by mass, and more preferably 4.0 parts by mass or more, relative to 100 parts by mass of the rubber component. The upper limit is, preferably less than 10.0 parts by mass.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide, and N, N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(b-9) Other

In addition to the above-mentioned components, the rubber composition may contain additives commonly used in the tire industry, such as organic fillers such as cellulose fibers, and organic peroxides, as necessary. The content of these additives is, for example, more than 0.1 parts by mass and less than 50 parts by mass relative to 100 parts by mass of the rubber component.
In the present invention, among the above-mentioned materials, various materials containing carbon atoms (e.g., rubber, oil, resin, vulcanization accelerator, anti-aging agent, surfactant, etc.) may be derived from carbon dioxide in the atmosphere. As a method for obtaining the compound of the present invention from carbon dioxide, carbon dioxide may be directly converted, or methane obtained through a methanation process for synthesizing methane from carbon dioxide may be converted.

(2) Preparation of rubber composition for tread

The rubber composition for treads can be prepared by a general method, for example, a manufacturing method including a base kneading step of kneading a rubber component with a filler such as silica, and a finish kneading step of kneading the kneaded product obtained in the base kneading step with a crosslinking agent.
The kneading can be carried out using a known (sealed type) kneading machine such as a Banbury mixer, a kneader, or an open roll.
The kneading temperature in the base kneading step is, for example, higher than 50 °C and lower than 200 °C, and the kneading time is, for example, longer than 30 seconds and shorter than 30 minutes. In the base kneading step, in addition to the above-mentioned components, compounding agents conventionally used in the rubber industry, for example, softeners such as oil, stearic acid, zinc oxide, anti-aging agents, waxes, vulcanization accelerators, etc. may be appropriately added and kneaded as necessary.
In the finish kneading step, the kneaded product obtained in the base kneading step is kneaded with a crosslinking agent. The kneading temperature in the finish kneading step is, for example, higher than room temperature and lower than 80°C, and the kneading time is, for example, longer than 1 minute and shorter than 15 minutes. In the finish kneading step, in addition to the above components, a vulcanization accelerator, zinc oxide, etc. may be appropriately added and kneaded as necessary.
The rubber composition obtained as described above can then be extruded into a predetermined shape to form a tread.

3. Tire manufacturing

The tire according to the present embodiment can be manufactured by a normal method. First, the rubber composition obtained as described above is molded into a predetermined shape to manufacture a tread. Next, the rubber composition is combined with other rubber components on a tire molding machine to manufacture an unvulcanized tire.
Specifically, an inner liner as a member for ensuring the airtightness of the tire, a carcass as a member that withstands the load, impact, and filled air pressure received by the tire, a belt as a member that tightly fastens the carcass and increases the rigidity of the tread, and bands as members that reinforce the belt are wound around a molding drum, and both ends of the carcass are fixed to both side edges, and beads as members for fixing the tire to the rim are arranged. After molding into a toroidal shape, a tread is pasted to the center of the outer periphery, and a sidewall is pasted to the radially outside to form the side portion, thereby producing an unvulcanized tire.
The unvulcanized tire thus produced is then heated and pressurized in a vulcanizer to obtain a tire. The vulcanization step can be carried out by applying a known vulcanization method. The vulcanization temperature is, for example, heigher than 120 °C and lower than 200 °C, and the vulcanization time is, for example, longer than 5 minutes and

shorter than 15 minutes.

As described above, the tire obtained as above uses a PET band cord as the band cord, and the tread is formed using an appropriately blended rubber composition for a tread. Furthermore, the product of the tread thickness, the styrene content in the SBR, and the diameter of the band cord is appropriately controlled, so that it is possible to improve the comprehensive performance of the tire, including the rolling resistance, and the durability and steering stability during high-speed running.

The tire according to the present invention can be suitably used as a passenger car tire, a large passenger car tire, a large SUV tire, a truck/bus tire, a motorcycle tire, a racing tire, a studless tire (winter tire), an all-season tire, a run-flat tire, or the like, and is particularly preferably used as a passenger car tire.

## EXAMPLES

Examples (embodiments) considered to be preferable for carrying out the present invention will be described below, but the scope of the present invention is not limited to these examples.

A tire (tire size: 215/60R16) consisting of a tread formed from various compounded materials shown below, and tire components such as bands and belts is examined, and the results of calculations based on the evaluation methods described below regarding rolling resistance, tire durability and steering stability during high-speed running, and comprehensive performance are also shown at the bottom of Tables 2 and 3.

### 1. Preparation of rubber composition

A rubber composition for tread is prepared using various compounding materials shown below.

(1) Compounding materials

(a) Rubber component

(a-1) SBR-1: Modified S-SBR produced according to Production Example 1 described later. (styrene content: 30% by mass, vinyl content: 25% by mole, Tg: -50°C, non-oil extended)
(a-2) SBR-2: Tufuden 1000 manufactured by Asahi Kasei Corporation (styrene content: 18% by mass, vinyl content: 10% by mole, Tg: -72°C, non-oil extended)
(a-3) SBR-3: Unmodified SBR produced according to Production Example 2 described later. (styrene content: 24% by mass, vinyl content: 11 mol%, Tg: -63°C, non-oil extended product)
(a-4) NR: TSR20
(a-5) BR: BR150B manufactured by Ube Industries (cis content: 96% by mass)

(Production Example 1)

The SBR - 1 is prepared according to the following procedure. First, cyclohexane, tetrahydrofuran, styrene, and 1,3-butadiene are charged into a nitrogen-substituted autoclave reactor. After adjusting the temperature of the reactor contents to 20 °C, n-butyllithium is added to initiate polymerization. Then, polymerization is carried out under adiabatic conditions, and when the maximum temperature reaches 85 °C and the polymerization conversion rate reaches 99%, 1,3-butadiene is added and polymerization is continued for another 5 minutes, and N, N-bis(trimethylsilyl)-3-aminopropyltrimethoxysilane is added as a modifier to carry out the reaction. After the polymerization reaction is completed, 2,6-di-tert-butyl-p-cresol is added, the solvent is removed by steam stripping, and the mixture is dried by a hot roll to obtain SBR-1.

(Production Example 2)

The above SBR -3 can be obtained by referring to Production Example 1, except that no modifier is added, and by adjusting the amount of styrene and the vinyl content.

(b) Compounding materials other than rubber components

(b-1) Carbon black: Show Black N220 manufactured by Cabot Japan Co., Ltd.

($N_2SA$: 111$m^2$/g)

(b-2) Silica: Ultrasil VN3 manufactured by Eponic Industries ($N_2SA$: 175 $m^2$/g, average primary particle diameter: 17nm)

(b-3) Silane coupling agent: Si266 manufactured by Evonik Industries (Bis(3-triethoxysilylpropyl)disulfide)

(b-4) Oil: H&R Vivatec 500 (TDAE, aromatic process oil)

(b-5) Resin: SYLVARES SA85 manufactured by Arizona Chemical Company (a-methylstyrene based resin: copolymer of $\alpha$-methylstyrene and styrene, softening point 85°C)

(b-6) Wax: Ozoace 0355 manufactured by Nippon Seiro Co., Ltd.

(b-7) Anti-aging agent: ANTAGE 6C manufactured by Kawaguchi Chemical Industry Co., Ltd. (N-(1,3 - dimethylbutyl) -N' - phenyl -p-phenylenediamine)

(b-8) Stearic acid: bead stearic acid "Tsubaki" manufactured by NOF Corp.

(b-9) Zinc oxide: Two types of zinc oxide manufactured by Hakusui Tech Co., Ltd.

(b-10) Sulfur: HK-200-5 (powdered sulfur) manufactured by Hosoi Chemical Industry Co., Ltd.

(b-11) Vulcanization accelerator-1: Sancerer CM-G manufactured by Sanshin Chemical Industry Co., Ltd. (N-cyclohexyl-2-benzothiazolyl sulfenamide (CBS)

(b-12) Vulcanization accelerator-2: SOXINOL DG manufactured by Sumitomo Chemical Co., Ltd. (1,3-diphenylguanidine (DPG))

(2) Preparation of rubber composition for tread

Based on each of the formulations A to D shown in Table 1, materials other than sulfur and the vulcanization accelerator are kneaded for 5 minutes under the condition of 150 °C using a 1.7 L Banbury mixer manufactured by Kobe Steel, Ltd. to obtain a kneaded product.

Next, sulfur and a vulcanization accelerator are added to the kneaded mixture, and the mixture is kneaded for 5 minutes under conditions of 80°C using an open roll to obtain rubber compositions for treads of formulations A to D.

[Table 1]

| | Formulation | | | |
|---|---|---|---|---|
| (parts by mass) | A | B | C | D |
| SBR-1 | 45 | 60 | - | - |
| SBR-2 | - | - | 70 | - |
| SBR-3 | - | - | - | 55 |
| (styrene content: % by mass) | (30) | (30) | (18) | (24) |
| N.R. | 30 | 25 | 15 | 20 |
| B.R. | 25 | 15 | 15 | 25 |
| Carbon Black | 5 | 5 | 5 | 5 |
| Silica | 70 | 60 | 80 | 80 |
| Silane Coupling Agent | 5.6 | 4.8 | 6.4 | 6.4 |
| Oil | 8 | 20 | 10 | 35 |
| Resin | 8 | 15 | 5 | 20 |
| Wax | 2 | 2 | 2 | 2 |
| Anti-aging agents | 2 | 2 | 2 | 2 |
| Stearic acid | 2 | 2 | 2 | 2 |
| Zinc oxide | 2 | 2 | 2 | 2 |
| Sulfur | 1.5 | 1.5 | 1.5 | 1.5 |
| Vulcanization accelerator-1 | 2 | 2 | 2 | 2 |
| Vulcanization accelerator-2 | 2 | 2 | 2 | 2 |
| AE amount (% by mass) | 12 | 21 | 11 | 25 |

2. Forming tire components (tread, band, belt)

(1) Forming of Tread

Next, the rubber composition obtained above is used to form tread (cap tread) having the thicknesses shown in Tables 2 and 3.

As described above, the tread thickness T shown in Tables 2 and 3 is a value measured on a cross section cut out in the radial direction of the tire with the bead portion aligned to the standardized rim width.

(2) Forming the Band

In parallel, each band cord shown in Tables 2 and 3 is topped with a predetermined rubber composition for bands to form each band.

Among the specifications of each band cord shown in Tables 2 and 3, the cord diameter D is a value measured as the equivalent diameter of a circumscribed circle of a cross-section perpendicular to the extension direction in accordance with the method specified in JIS L1017:2002 "Testing methods for synthetic fiber tire cords."

(3) Forming the Belt

Similarly, each belt cord shown in Tables 2 and 3 is topped with a predetermined rubber composition for belts to form each belt.

Among the specifications of each belt cord shown in Tables 2 and 3, the cord fineness is a value measured in accordance with the method specified in JIS L1017:2002 "Testing methods for synthetic fiber tire cords." The cord gauge (cord diameter) is a value measured in accordance with the testing method specified in JIS G3510:1992 "Testing methods for steel tire cords." When the circumscribing circle of a cross-section perpendicular to the extending direction of the cord is a perfect circle, the value indicates the diameter, and when the circumscribing circle is an ellipse, the value indicates the equivalent circle diameter (the diameter of a circle assuming a perfect circle with the same cross-sectional area).

(4) Forming the Carcass

Similarly, each carcass cord shown in Tables 2 and 3 is topped with a predetermined carcass rubber composition to form each carcass.

3. Tire manufacturing

Next, each of the treads, bands, belts, and carcasses obtained above are pasted together with other tire components to form an unvulcanized tire, which is then press-vulcanized for 10 minutes under a condition of 170°C to produce test tires of Examples 1 to 5 and Comparative Examples 1 to 6 .

4. Parameters

Then, $T \times S \times D$ is calculated.

5. Performance evaluation test

(1) Evaluation of Rolling resistance

Using a rolling resistance tester, the rolling resistance coefficient (RRC) of each test tire is measured when the tire runs on a drum at a speed of 80 km/h under the following conditions.

Rim used: 16 × 6.5J
Internal pressure: 210 kPa
Load: 4.6kN

The rolling resistance is evaluated by indexing the results according to the following formula, with the result of Comparative Example 1 being set at 100. A larger value indicates a greater reduction in rolling resistance.

Evaluation of Rolling resistance = [(Results of Comparative Example 1) / (Results of Test Tire)] × 100

(2) Evaluation of tire durability at high-speed running

Each test tire is mounted on a rim (size = 16 × 6.5J), and a durability test of the tire at high-speed running is carried out in accordance with the method specified in JIS D 4230:1998 "Automobile tires".
Next, the result of Comparative Example 1 is set to 100 and indexed according to the following formula to provide an index of tire durability during high-speed running and evaluation. A larger value indicates better tire durability during high-speed running.

Tire durability evaluation at high-speed running = [(Results of Test Tire) / ((Results of Comparative Example 1)] × 100

(3) Evaluation of Steering stability

Each test tire is installed to all wheels of a vehicle (a domestically produced FR vehicle with an engine displacement of 2,000 cc), and the vehicle is driven around a test course at a speed of 70 km/h or more. Each of 10 test drivers gives a sensory evaluation of the steering stability on a scale of 1 to 5 points (the higher the number, the better), and the total score was then calculated.
Next, the result of Comparative Example 1 is set to 100, and the result is indexed according to the following formula to obtain the steering stability evaluation. A larger value indicates better steering stability during high-speed running.

Evaluation of Steering stability = [(Result of Test Tire) / ((Results of Comparative Example 1)] × 100

(4) Comprehensive evaluation

Then, (1) to (3) are added together to arrive at a comprehensive evaluation.

[Table 2]

| | Comparative Example | | | | | |
|---|---|---|---|---|---|---|
| | 1 | 2 | 3 | 4 | 5 | 6 |
| (Tread) | | | | | | |
| Formulation | A | A | B | B | C | C |
| Thickness T (mm) | 7 | 7 | 7 | 5 | 12 | 12 |
| SBR content (parts by mass) | 45 | 45 | 60 | 60 | 70 | 70 |
| Styrene content S (% by mass) | 30 | 30 | 30 | 30 | 18 | 18 |
| Silica (parts by mass) | 70 | 70 | 60 | 60 | 80 | 80 |
| AE amount (% by mass) | 12 | 12 | 21 | 21 | 11 | 11 |
| (Band) | | | | | | |
| Cord Material | N66 | PET | PET | PET | PET | PET |
| Code structure | 2-ply | 2-ply | 2-ply | Single twist | Single twist | Single twist |
| Cord diameter D (mm) | 0.66 | 0.62 | 0.62 | 0.57 | 0.57 | 0.4 |
| Cord gauge (mm) | 0.05 | 0.05 | 0.05 | 0.05 | 0.05 | 0.05 |
| Total gauge (mm) | 0.76 | 0.72 | 0.72 | 0.67 | 0.67 | 0.50 |
| T×S×D | 138.6 | 130.2 | 130.2 | 85.5 | 123.12 | 86.4 |
| (Belt cord) | | | | | | |
| Number of filaments (pieces) | 4 | 2 | 5 | 5 | 1 | 9 |
| Code structure | 1×4 | 1×2 | 1×5 | 1×5 | 1×1 | 1x9 |
| Intersection angle (degrees) | 20 | 40 | 28 | 15 | 20 | 20 |
| (Carcass) | | | | | | |
| Cord Material | PET | PET | PET | PET | PET | PET |

(continued)

| | | | | | | |
|---|---|---|---|---|---|---|
| (Carcass) | | | | | | |
| Cord fineness (dtex) | 3340 | 3340 | 3340 | 2880 | 2880 | 2200 |
| Code gauge (mm) | 0.68 | 0.68 | 0.68 | 0.63 | 0.63 | 0.55 |
| (Evaluation) | | | | | | |
| Rolling resistance (RRC) | 100 | 102 | 98 | 99 | 98 | 96 |
| Tire durability at high- speed running | 100 | 96 | 102 | 101 | 101 | 98 |
| Steering stability | 100 | 94 | 97 | 100 | 100 | 103 |
| Comprehensive evaluation | 300 | 292 | 297 | 300 | 299 | 297 |

[Table 3]

| | Example | | | | |
|---|---|---|---|---|---|
| | 1 | 2 | 3 | 4 | 5 |
| (Tread) | | | | | |
| Formulation | C | C | D | D | D |
| Thickness T (mm) | 7 | 7 | 7 | 5 | 5 |
| SBR content (parts by mass) | 70 | 70 | 55 | 55 | 55 |
| Styrene content S (% by mass) | 18 | 18 | 24 | 24 | 24 |
| Silica (parts by mass) | 80 | 80 | 80 | 80 | 80 |
| AE amount (% by mass) | 11 | 11 | 25 | 25 | 25 |
| (Band) | | | | | |
| Cord Material | PET | PET | PET | PET | PET |
| Code structure | 2-ply | Single twist | Single twist | Single twist | Single twist |
| Cord diameter D (mm) | 0.62 | 0.5 | 0.40 | 0.5 | 0.4 |
| Cord gauge (mm) | 0.05 | 0.05 | 0.03 | 0.05 | 0.05 |
| Total gauge (mm) | 0.72 | 0.60 | 0.46 | 0.60 | 0.50 |
| T×S×D | 78.12 | 63 | 67.2 | 60 | 48 |
| (Belt cord) | | | | | |
| Number of filaments | 4 | 2 | 5 | 1 | 2 |
| Code structure | 1×4 | 1×2 | 1×5 | 1×1 | 1×2 |
| Intersection angle (degrees) | 20 | 20 | 24 | 28 | 24 |
| (Carcass) | | | | | |
| Cord Material | PET | PET | PET | PET | PET |
| Cord fineness (dtex) | 3340 | 2880 | 3340 | 3340 | 2880 |
| Code gauge (mm) | 0.68 | 0.63 | 0.68 | 0.68 | 0.63 |
| (Evaluation) | | | | | |
| Rolling resistance (RRC) | 103 | 105 | 103 | 110 | 108 |
| Tire durability at high-speed running | 107 | 105 | 105 | 104 | 106 |
| Steering stability | 103 | 103 | 110 | 103 | 106 |
| Comprehensive evaluation | 313 | 313 | 318 | 317 | 320 |

Although the present invention has been described based on the embodiment, the present invention is not limited to the above embodiment. Various modifications can be made to the above embodiment within the same and equivalent scope of the present invention.

[EXPLANATION OF SYMBOLS]

| | |
|---|---|
| 1. | Tire |
| 2. | Tread |
| 3. | Sidewall |
| 4. | Chafer |
| 5. | Beads |
| 6. | Inner liner |
| 7. | Carcass |
| 8. | Belt |
| 8a. | Belt cord |
| 9. | Filler |
| 10. | Bands |
| CL | Tire circumferential centerline |
| θ | Intersection angle |

**Claims**

**1.** A tire provided with

a carcass having a carcass cord;
a belt having a belt cord and provided on an outer side of the carcass in a radial direction of the tire;
a band having a band cord and provided on an outer side of the belt in a radial direction of the tire; and
a tread provided on an outer side of the band in a tire radial direction, wherein
the band cord is a band cord containing polyethylene terephthalate fibers,
the tread is formed using a rubber composition containing more than 50 parts by mass of styrene-butadiene rubber (SBR) having a styrene content of less than 25% by mass per 100 parts by mass of the rubber component, and
the tire is **characterized in that**, when the thickness of the tread is T (mm), the amount of styrene in the styrene-butadiene rubber is S (% by mass), and the diameter of the band cord is D (mm), the following (formula 1) is satisfied:

$$T \times S \times D < 80 \qquad \text{(formula 1)}$$

**2.** The tire according to claim 1, wherein the band cord is a single-twisted band cord obtained by twisting a single yarn containing polyethylene terephthalate fibers.

**3.** The tire according to claim 2, wherein the diameter of the band cord is more than 0.2 mm, preferably 0.4 mm or more, preferably 0.5 mm or more, or 0.62 mm or more.

**4.** The tire according to any one of claims 1 to 3, wherein the belt cord is formed by twisting one or more and four or less filaments.

**5.** The tire according to claim 4, wherein the belt cord has a structure selected from the group consisting of a 1×1 structure, a 1×2 structure, a 1×3 structure, a 1×4 structure, and a 2+2 structure.

**6.** The tire according to any one of claims 1 to 5, wherein, when the tread is viewed in a plane in the tire radial direction, an intersection angle, which is the smaller angle between the tire circumferential direction and the longitudinal direction of the belt cord, is 28 degrees or less, preferably less than 25 degrees, preferably 24 degrees or less, preferably less than 24 degrees, or preferably 20 degrees or less.

7. The tire according to any one of claims 1 to 6, wherein the carcass is formed using carcass cords having a fineness of more than 2300 dtex, preferably 2880 dtex or more, or preferably 3340 dtex or more.

8. The tire according to any one of claims 1 to 7, wherein the styrene content is 24% by mass or less, preferably 20% by mass or less, or preferably 18% by mass or less.

9. The tire according to any one of claims 1 to 8, wherein a content of the styrene-butadiene rubber in 100 parts by mass of a rubber component of the rubber composition is 55 parts by mass or more, preferably more than 60 parts by mass, or preferably 70 parts by mass or more.

10. The tire according to any one of claims 1 to 9, wherein the rubber composition contains more than 75 parts by mass, preferably 80 parts by mass or more, or preferably 90 parts by mass or more of silica per 100 parts by mass of the rubber component.

11. The tire according to any one of claims 1 to 10, wherein the acetone extractable content of the rubber composition is 11% by mass or more, preferably more than 15% by mass, preferably more than 20% by mass, or preferably more than 25% by mass or more.

12. The tire according to any one of claims 1 to 11, wherein the thickness of tread is 5 mm or more, preferably more than 6 mm, preferably 7 mm or more, preferably 8 mm or more, or preferably 10 mm or more.

13. The tire according to any one of claims 1 to 12, wherein the ($T \times S \times D$) is less than 79, preferably less than 70, preferably less than 68, preferably less than 65, preferably 63 or less, preferably 60 or less, or 48 or less.

14. The tire according to any one of claims 1 to 13, wherein the polyethylene terephthalate fiber is a sustainable PET fiber.

15. The tire according to claim 14, wherein the sustainable PET fiber is a recycled PET fiber or a bio- PET fiber.

16. The tire according to any one of claims 1 to 15, wherein the rubber composition contains a vegetable oil.

17. The tire according to any one of claims 1 to 16, wherein the rubber composition contains a sustainable carbon black.

18. The tire according to claim 17, wherein the sustainable carbon black is a recycled carbon black or a biomass carbon black.

19. The tire according to any one of claims 1 to 18, wherein the rubber composition contains a sustainable silica.

20. The tire according to claim 19, wherein the sustainable silica is biomass silica or recycled silica.

[Figure. 1]

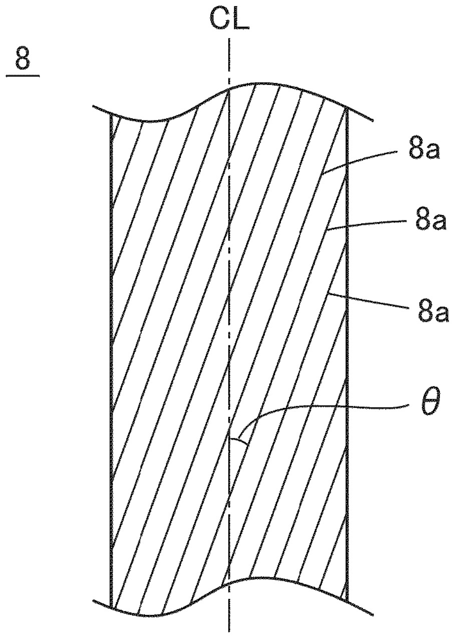

Figure 2

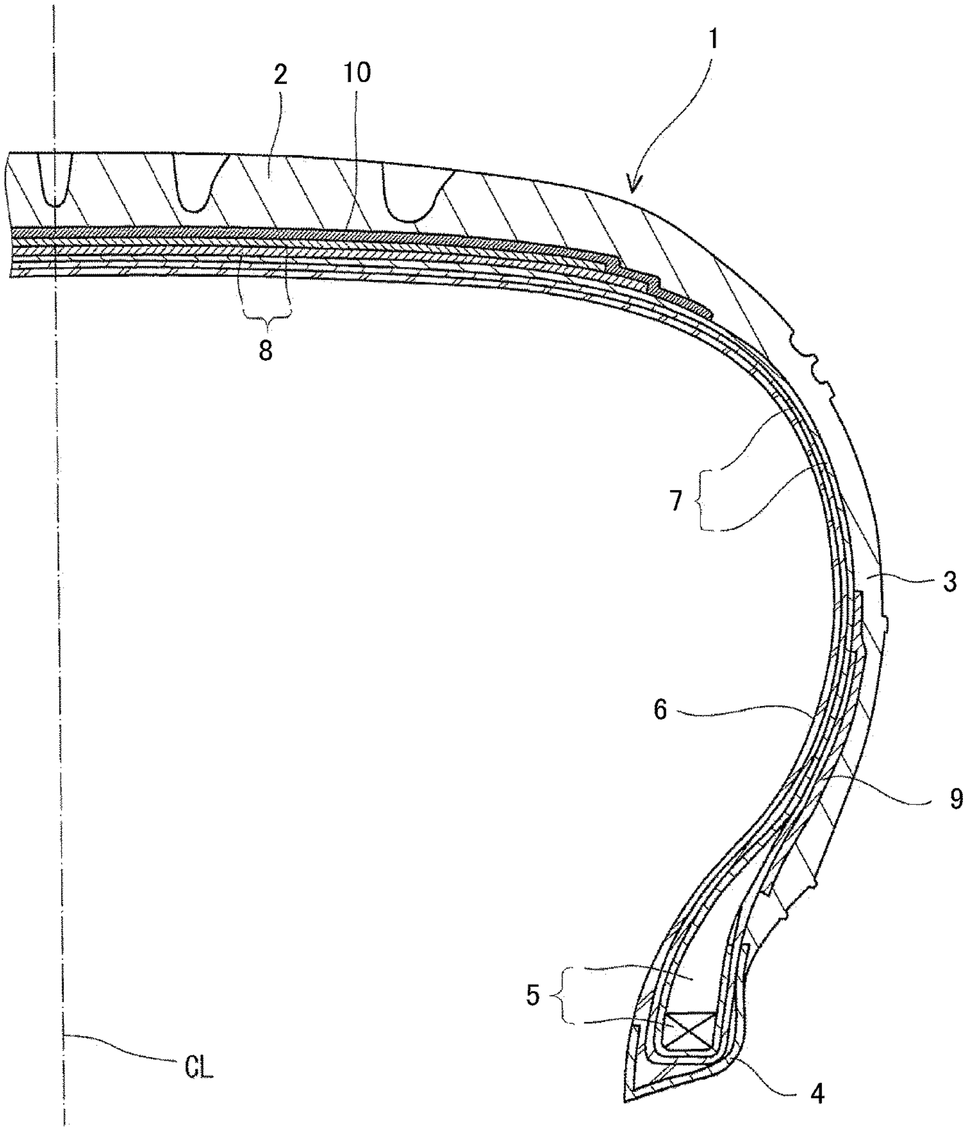

Europäisches Patentamt
European Patent Office
Office européen des brevets

# EUROPEAN SEARCH REPORT

Application Number
EP 25 19 7205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 4 389 458 A1 (SUMITOMO RUBBER IND [JP]) 26 June 2024 (2024-06-26)<br>* paragraphs [0033] - [0043], [0103] - [0106], [0119], [0120], [0162], [0205], [0212], [0220], [0223], [0240], [0306]; claims 1-15; figures 1-5; table 1 *<br>----- | 1,4-6, 8-20<br>2,3,7 | INV.<br>B60C1/00<br>B60C9/00<br>B60C9/20<br>B60C11/00 |
| Y | US 2020/369086 A1 (LEE KYOUNG HA [KR] ET AL) 26 November 2020 (2020-11-26)<br>* paragraph [0065]; claims 1-4; figures 1-3; tables 1,2 *<br>----- | 2,3,7 | |
| | | | TECHNICAL FIELDS SEARCHED (IPC) |
| | | | B60C |

The present search report has been drawn up for all claims

2

| Place of search | Date of completion of the search | Examiner |
|---|---|---|
| Munich | 9 December 2025 | Carneiro, Joaquim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 19 7205

This annex lists the patent family members relating to the patent documents cited in the above-mentioned European search report. The members are as contained in the European Patent Office EDP file on
The European Patent Office is in no way liable for these particulars which are merely given for the purpose of information.

09-12-2025

| Patent document cited in search report | Publication date | Patent family member(s) | Publication date |
|---|---|---|---|
| EP 4389458 A1 | 26-06-2024 | CN 118219711 A | 21-06-2024 |
| | | EP 4389458 A1 | 26-06-2024 |
| | | JP 2024087264 A | 01-07-2024 |
| US 2020369086 A1 | 26-11-2020 | CN 111278665 A | 12-06-2020 |
| | | DE 112018005195 T5 | 10-06-2020 |
| | | KR 20190049046 A | 09-05-2019 |
| | | US 2020369086 A1 | 26-11-2020 |
| | | WO 2019088464 A1 | 09-05-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022038812 A
- JP 2010111753 A
- JP 2009002594 A
- US 4414370 A
- JP 59006207 A
- JP 5058805 A
- JP 1313522 A
- US 5010166 B


### Non-patent literature cited in the description


- *Akita Prefectural University Web Journal B*, 2019, vol. 6, 216-222
- *Toa Synthetic Research Annual Report TREND*, 2000, vol. 3, 42-45